# EUROPEAN PATENT APPLICATION

(11) **EP 4 513 994 A1**
(43) Date of publication of application: **26.02.2025**
(21) Application number: 22938583.6
(22) Date of filing: 22.04.2022
(51) Int. Cl.: H04W 60/02, H04W 4/40, H04W 64/00

(54) **TERMINAL AND POSITIONING METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/018632
(87) International publication number: WO 2023/203784

(57) **Abstract**

A terminal includes: a reception unit configured to receive, from a first terminal, a signal related to positioning in device-to-device direct communication; a control unit configured to execute measurement based on the signal related to the positioning in the device-to-device direct communication and to assume that acquired information is valid within a certain period of time; and a transmitting unit configured to transmit the information based on the measurement to the first terminal.

## Description

### Technical Field

The present invention relates to a terminal and a positioning method in a wireless communication system.

### Background Art

In long term evolution (LTE) and a succeeding system of LTE (for example, LTE advanced (LTE-A) and new radio (NR) (also referred to as 5G)), a study has been conducted on a device to device (D2D) technology in which terminals perform direct communication without passing through a base station (for example, Non Patent Literature 1).

D2D reduces traffic between a terminal and a base station, and enables communication between terminals even when the base station becomes incommunicable at the time of disaster or the like. It is noted that, in the 3rd generation partnership project (3GPP), D2D is referred to as a "sidelink", but in the present specification, D2D, which is a more general term, is used. However, a sidelink is also used as necessary in the description of the embodiment to be described later.

D2D communication is roughly divided into D2D discovery (D2D discovery, also referred to as D2D discovery) for discovering other communicable terminals and D2D communication (also referred to as D2D direct communication, D2D communication, device-to-device direct communication, or the like) for performing direct communication between terminals. Hereinafter, when the D2D communication, the D2D discovery, and the like are not particularly distinguished, they are simply referred to as D2D. Further, a signal transmitted and received by D2D is referred to as a D2D signal. A study has been conducted on various use cases of services related to vehicle to everything (V2X) in NR (for example, Non Patent Literature 2).

### Citation List

### Non Patent Literature

Non Patent Literature 1: 3GPP TS 38.211 V16.8.0(2021-12)
Non Patent Literature 2: 3GPP TR 22.886 V15.1.0(2017-03)
Non Patent Literature 3: 3GPP TS 38.305 V16.7.0(2021-12)
Non Patent Literature 4: 3GPP TS 38.455 V16.6.0(2021-12)
Non Patent Literature 5: 3GPP TS 37.355 V16.7.0(2021-12)
Non Patent Literature 6: 3GPP TS 23.032 V16.1.0(2021-12)
Non Patent Literature 7: 3GPP TS 38.215 V16.4.0(2020-12)

### Summary of Invention

### Technical Problem

Positioning has been studied in scenarios of device-to-device direct communication, for example, within coverage, partial coverage, and outside coverage, vehicle to everything (V2X), public safety, commercial, and industrial Internet of Things (IIOT), and the like. Here, since a terminal moves, it is assumed that reliability of information related to the positioning deteriorates as time elapses. However, an expiration date of the information related to the positioning has not been stipulated.

The present invention has been made in view of the above points, and an object thereof is to assume an expiration date of information related to positioning in device-to-device direct communication.

### Solution to Problem

According to the disclosed technology, there is provided a terminal including: a reception unit configured to receive, from a first terminal, a signal related to positioning in device-to-device direct communication; a control unit configured to determine whether the signal related to the positioning in the device-to-device direct communication is a signal received again from the first terminal within a certain period of time, and to execute, when the signal related to the positioning in the device-to-device direct communication is not the signal received again from the first terminal within the certain period of time, measurement based on the signal related to the positioning in the device-to-device direct communication or to cause a second terminal to execute the measurement; and a transmitting unit configured to transmit, to the first terminal, a measurement result of the terminal itself or the second terminal.

### Advantageous Effects of Invention

According to the disclosed technology, it is possible to assume an expiration date of information related to positioning in device-to-device direct communication.

### Brief Description of Drawings

[Fig. 1] Fig. 1 is a diagram illustrating a wireless communication system.
[Fig. 2] Fig. 2 is a diagram illustrating V2X.
[Fig. 3] Fig. 3 is a diagram illustrating an example of communication in D2D.
[Fig. 4] Fig. 4 is a diagram illustrating an example (1) of positioning.
[Fig. 5] Fig. 5 is a diagram illustrating an example of measuring DL-RSTD.
[Fig. 6] Fig. 6 is a diagram illustrating an example of measuring UL-RTOA.
[Fig. 7] Fig. 7 is a diagram illustrating an example (2) of positioning.
[Fig. 8] Fig. 8 is a diagram illustrating an example of measuring RTT.
[Fig. 9] Fig. 9 is a flowchart illustrating an example (1) of position estimation according to an embodiment of the present invention.
[Fig. 10] Fig. 10 is a diagram illustrating the example (1) of position estimation according to the embodiment of the present invention.
[Fig. 11] Fig. 11 is a diagram illustrating an arrangement example of a reference signal according to the embodiment of the present invention.
[Fig. 12] Fig. 12 is a flowchart illustrating an example (2) of position estimation according to the embodiment of the present invention.
[Fig. 13] Fig. 13 is a diagram illustrating the example (2) of position estimation according to the embodiment of the present invention.
[Fig. 14] Fig. 14 is a flowchart illustrating an example (3) of position estimation according to the embodiment of the present invention.
[Fig. 15] Fig. 15 is a diagram illustrating the example (3) of position estimation according to the embodiment of the present invention.
[Fig. 16] Fig. 16 is a flowchart illustrating an example (4) of position estimation according to the embodiment of the present invention.
[Fig. 17] Fig. 17 is a diagram illustrating the example (4) of position estimation according to the embodiment of the present invention.
[Fig. 18] Fig. 18 is a flowchart illustrating an example (5) of position estimation according to the embodiment of the present invention.
[Fig. 19] Fig. 19 is a diagram illustrating the example (5) of position estimation according to the embodiment of the present invention.
[Fig. 20] Fig. 20 is a diagram illustrating an example of an expiration date of information related to positioning according to the embodiment of the present invention.
[Fig. 21] Fig. 21 is a diagram illustrating an example (1) of transmission and reception of the information related to the positioning according to the embodiment of the present invention.
[Fig. 22] Fig. 22 is a diagram illustrating an example (2) of transmission and reception of the information related to the positioning according to the embodiment of the present invention.
[Fig. 23] Fig. 23 is a diagram illustrating an example (3) of transmission and reception of the information related to the positioning according to the embodiment of the present invention.
[Fig. 24] Fig. 24 is a diagram illustrating an example of a functional configuration of a base station 10 according to the embodiment of the present invention.
[Fig. 25] Fig. 25 is a diagram illustrating an example of a functional configuration of a terminal 20 according to the embodiment of the present invention.
[Fig. 26] Fig. 26 is a diagram illustrating an example of a hardware configuration of the base station 10 or the terminal 20 according to the embodiment of the present invention.
[Fig. 27] Fig. 27 is a diagram illustrating an example of a configuration of a vehicle 2001 according to the embodiment of the present invention.

### Description of Embodiments

Hereinafter, an embodiment of the present invention will be described with reference to the drawings. Note that the embodiment described below is an example, and the embodiment to which the present invention is applied is not limited to the following embodiment.

In the operation of a wireless communication system of the embodiment of the present invention, an existing technology is appropriately used. The existing technology is, for example, existing LTE, but the present invention is not limited to the existing LTE. In addition, the term "LTE" used in the present specification has a broad meaning including LTE-Advanced, systems subsequent to LTE-Advanced (for example, NR), and a wireless local area network (LAN), unless otherwise specified.

In the embodiment of the present invention, a duplex system may be a time division duplex (TDD) system, a frequency division duplex (FDD) system, or other systems (for example, flexible duplex and the like).

In addition, in the embodiment of the present invention, meaning of a radio parameter or the like being "set (configured)" may indicate that a predetermined value is set in advance (pre-configured), or that a radio parameter indicated by a base station 10 or a terminal 20 is set.

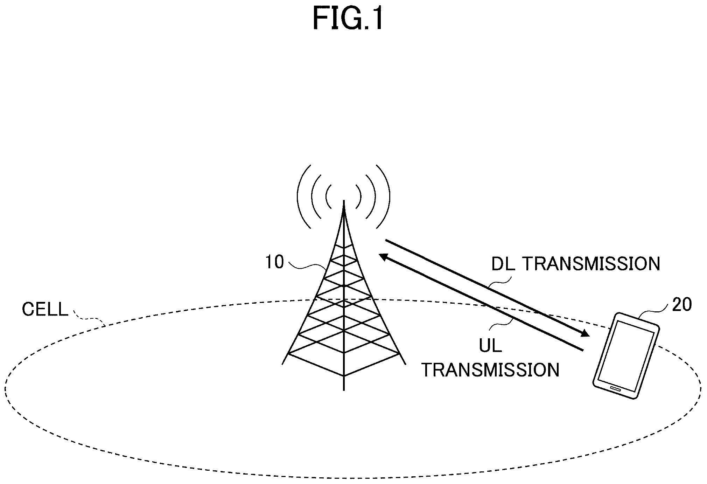

Fig. 1 is a diagram illustrating a wireless communication system according to the embodiment of the present invention. As illustrated in Fig. 1, the wireless communication system according to the embodiment of the present invention includes a base station 10 and a terminal 20. Although one base station and one terminal are illustrated in Fig. 1, the drawing is an example, and a plurality of base stations 10 and a plurality of terminals 20 may be provided.

The base station 10 is a communication device that provides one or more cells and performs wireless communication with the terminal 20. Physical resources of a radio signal are defined in a time domain and a frequency domain, the time domain may be defined by the number of orthogonal frequency division multiplexing (OFDM) symbols, and the frequency domain may be defined by the number of sub-carriers or the number of resource blocks. In addition, a transmission time interval (TTI) in the time domain may be a slot, or the TTI may be a sub-frame.

The base station 10 transmits a synchronization signal and system information to the terminal 20. The synchronization signal is, for example, an NR-PSS and an NR-SSS. The system information is transmitted through, for example, NR-PBCH and is also referred to as indication information. The synchronization signal and the system information may be referred to as an SS/PBCH block (SSB). As illustrated in Fig. 1, the base station 10 transmits a control signal or data to the terminal 20 through a downlink (DL) and receives a control signal or data from the terminal 20 through an uplink (UL). Both the base station 10 and the terminal 20 can transmit and receive a signal by performing beamforming. In addition, both the base station 10 and the terminal 20 can apply communication based on multiple input multiple output (MIMO) to the DL or the UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (primary SCG cell, PSCell) of another base station 10 by dual connectivity (DC).

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by a wireless communication system by receiving a control signal or data from the base station 10 through the DL and transmitting a control signal or data to the base station 10 through the UL. In addition, the terminal 20 receives various reference signals transmitted from the base station 10 and measures a propagation path quality based on a reception result of the reference signals. Note that the terminal 20 may be referred to as UE, and the base station 10 may be referred to as gNB.

In addition, in LTE or NR, a carrier aggregation function using a broadband to secure data resources is supported. In the carrier aggregation function, a plurality of component carriers is bundled, thereby making it possible to secure broadband data resources. For example, a 100 MHz width may be used by bundling a plurality of 20 MHz bandwidths.

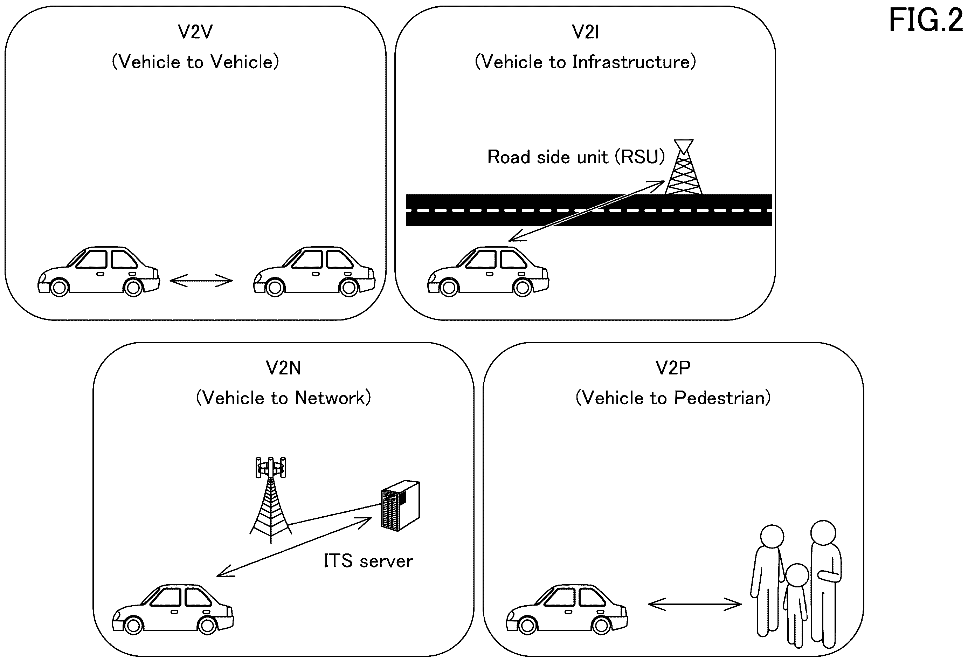

Fig. 2 is a diagram illustrating V2X. In 3GPP, realization of vehicle to everything (V2X) or enhanced V2X (eV2X) by extending a D2D function is being discussed, and technical specifications are being developed. As illustrated in Fig. 1, V2X is a part of intelligent transport systems (ITS), and is a generic name of vehicle to vehicle (V2V) meaning a communication form performed between vehicles, vehicle to infrastructure (V2I) meaning a communication form performed between a vehicle and a roadside unit (RSU) installed beside a road, vehicle to network (V2N) meaning a communication form performed between a vehicle and an ITS server, and vehicle to pedestrian (V2P) meaning a communication form performed between a vehicle and a mobile terminal possessed by a pedestrian.

In addition, in 3GPP, V2X using LTE or NR cellular communication and device-to-device communication is being discussed. V2X using cellular communication is also referred to as cellular V2X. In V2X of NR, studies to realize a large capacity, a low delay, high reliability, and quality of service (QoS) control are in progress.

Regarding V2X of LTE or NR, it is assumed that studies not limited to the 3GPP specification will be conducted in the future. For example, it is assumed that consideration will be given as to securing interoperability, reducing costs by implementation of an upper layer, a method of using a plurality of radio access technologies (RATs) in parallel or switching between the plurality of RATs, regulatory compliance in each country, and a method of acquiring, distributing, managing a database of, and using data of an LTE or NR V2X platform.

In the embodiment of the present invention, a mode in which a communication device is mounted on a vehicle is mainly assumed, but the embodiment of the present invention is not limited to such mode. For example, the communication device may be a terminal held by a person, the communication device may be a device mounted on a drone or an aircraft, or the communication device may be a base station, an RSU, a relay station (a relay node), a terminal having a scheduling capability, or the like.

Note that sidelink (SL) may be distinguished based on either or a combination of uplink (UL) or downlink (DL) and the following 1) to 4). Further, SL may have another name.
1) Resource allocation in time domain
2) Resource allocation in frequency domain
3) Synchronization signal to be referred to (including sidelink synchronization signal (SLSS))
4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM not subjected to transform precoding, and OFDM subjected to transform precoding may be applied.

In the SL of LTE, Mode 3 and Mode 4 are stipulated regarding resource allocation of the SL to the terminal 20. In Mode 3, transmission resources are dynamically allocated by downlink control information (DCI) transmitted from the base station 10 to the terminal 20. In Mode 3, semi persistent scheduling (SPS) is also possible. In Mode 4, the terminal 20 autonomously selects a transmission resource from a resource pool.

A slot in the embodiment of the present invention may be replaced with a symbol, a mini-slot, a sub-frame, a radio frame, a transmission time interval (TTI), or a time resource having a predetermined width. In addition, a cell in the embodiment of the present invention may be replaced with a cell group, a carrier component, a BWP, a resource pool, a resource, a radio access technology (RAT), a system (including a wireless LAN), or the like.

Note that, in the embodiment of the present invention, the terminal 20 is not limited to the V2X terminal, and may be any type of terminal that performs D2D communication. For example, the terminal 20 may be a terminal such as a smartphone possessed by a user, or may be an Internet of Things (IoT) device such as a smart meter.

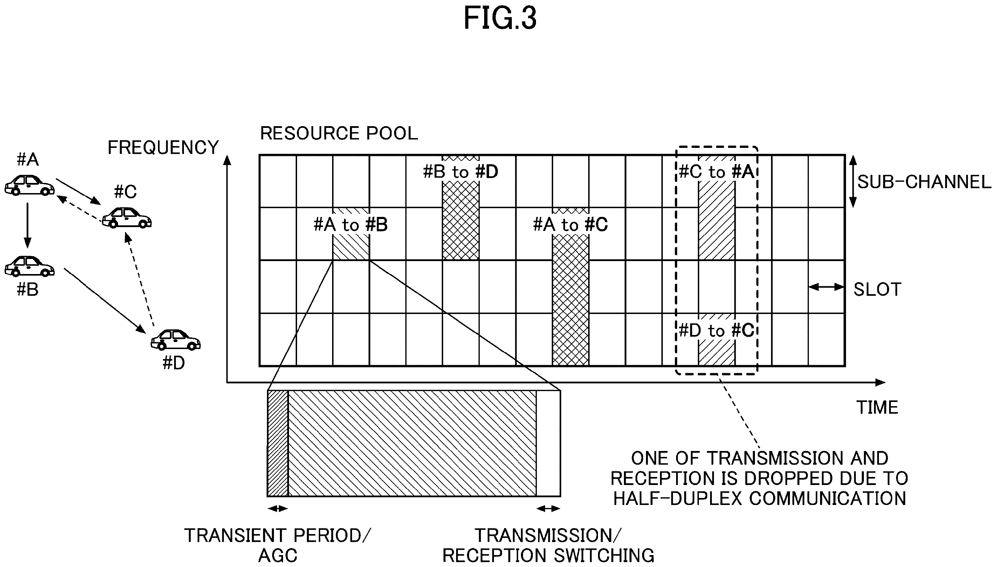

Fig. 3 is a diagram illustrating an example of communication in D2D. As illustrated in Fig. 3, an environment is assumed in which a plurality of UEs communicate with each other, such as a UE#A, a UE#B, a UE#C, and a UE#D. A resource pool used for transmission and reception by each of the UEs is a set of resources in the time domain and the frequency domain. The resource pool may be set or pre-set by a system or a service provider. For example, in the resource pool, several time resources based on a cycle may be available for cyclical traffic. Furthermore, for example, in the resource pool, some frequency resources may be unavailable to reduce interference to a Uu interface (a radio interface between a universal terrestrial radio access network (UTRAN) and a user equipment (UE)).

A sub-channel in the resource pool illustrated in Fig. 3 is a unit of scheduling in the frequency domain. For example, {10, 12, 15, 20, 25, 50, 75, 100} PRB may be set as one sub-channel or may be pre-set.

A slot in the resource pool illustrated in Fig. 3 is a unit of scheduling in the time domain. The scheduling in units of symbols may be too complex if the UE autonomously selects resources. However, the scheduling may not be performed in units of slots.

As illustrated in Fig. 3, the head of the slot to be transmitted from the UE#A to the UE#B is a transient period from the viewpoint of transmitting UE. The transient period is a period necessary for adjustment of transmission power. On the other hand, the head of the slot to be transmitted from the UE#A to the UE#B is used for auto gain control (AGC) from the viewpoint of receiving UE. The reception power significantly varies between links, and a predetermined period is required to adjust a power range. By performing scheduling in units of slots, an increase in AGC opportunities can be prevented.

As illustrated in Fig. 3, the end of the slot to be transmitted from the UE#A to the UE#B is used for a transmission/reception switching period. A certain UE may perform transmission in a slot n and then may perform reception in a slot n+1. The transmission/reception switching period is defined for each slot.

As illustrated in Fig. 3, when the transmission from the UE#C to the UE#A and the transmission from the UE#D to the UE#C overlap each other in the same slot, the UE#C cannot simultaneously execute the transmission and the reception, and thus, it is necessary to drop one of the transmission and the reception. That is, communication in D2D is half-duplex communication.

Note that default setting when coverage is out of the coverage of the base station may be pre-set (pre-configuration). Note that RRC connection/setting between UEs that perform unicast is referred to as PC5-RRC connection/setting.

Here, positioning is being discussed in scenarios of device-to-device direct communication, for example, within coverage, partial coverage, and outside coverage, or in vehicle to everything (V2X), public safety, commercial, industrial Internet of Things (IIOT), and the like. Within coverage may mean that a plurality of UEs related to positioning are within coverage of the BS, partial coverage may mean that a part of the plurality of UEs related to positioning is within coverage of the BS, and outside coverage may mean that the plurality of UEs related to positioning are not within coverage of the BS.

Positioning of the terminal 20 by location management function (LMF) in the Uu interface of 3GPP Release 16 or 17 is executed by methods of the following 1) to 3) (refer to Non Patent Literature 3, Non Patent Literature 4, and Non patent Literature 5).

1) Method based on time DL-time difference of arrival (TDOA)
2) Method based on UL-TDOA
3) Method based on multiple round trip time (RTT)

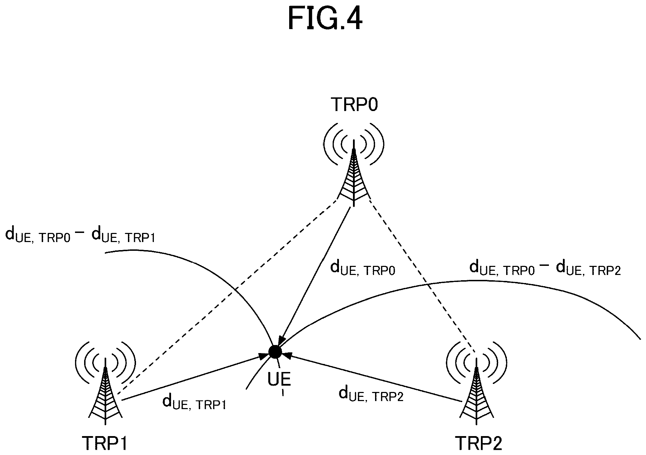

Fig. 4 is a diagram illustrating an example (1) of positioning. As illustrated in Fig. 4, position information of the UE may be calculated based on the DL-TDOA. The position of the UE may be estimated based on a DL-received signal time difference (RSTD) in which the UE measures DL radio signals transmitted from a plurality of NR TRPs. For the estimation, the geographical position of the TRP and the DL transmission timing at the TRP may be used. Furthermore, the position of the UE may be estimated based on reference signal received power (RSRP) of DL-positioning reference signal (PRS) in addition to DL-RSTD.

In the method based on DL-TDOA, the position of the UE may be calculated in the following procedure.
1) The gNB transmits DL-PRS from each TRP to the UE
2) The UE reports the DL-RSTD which is the measurement result to GW and/or gNB and/or LMF via LTE positioning protocol (LPP)
3) The gNB reports timing information related to the TRP to the LMF via NR Positioning Protocol A (NRPPa)
4) Based on the above-described information reported from the UE and the gNB, the LMF calculates the UE position

For example, as illustrated in Fig. 4, a delay between the UE and a TRP0, a delay between the UE and a TRP1, and a delay between the UE and a TRP2 may be measured, and the position of the UE may be calculated based on a geographical position and a DL transmission timing of each TRP.

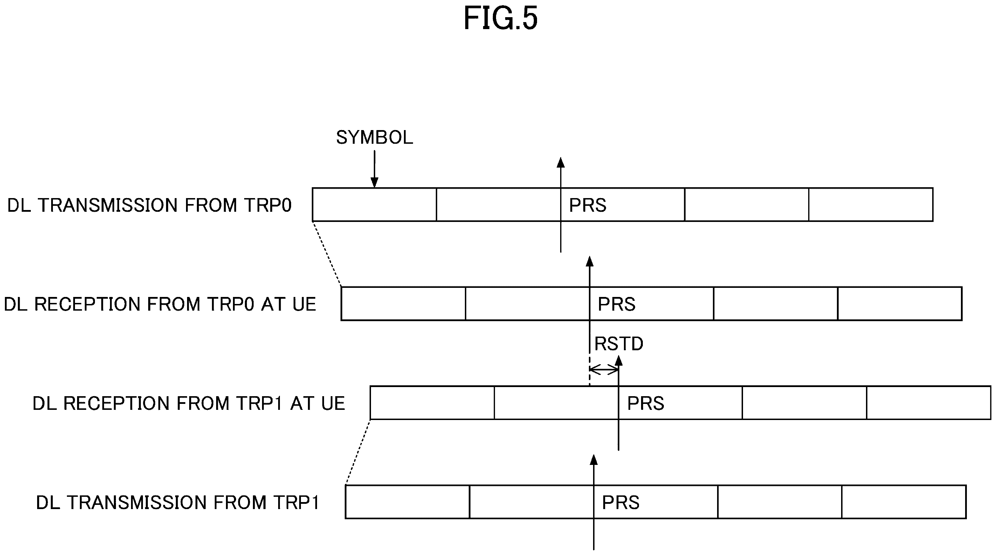

Fig. 5 is a diagram illustrating an example of measuring DL-RSTD. Hereinafter, "and/or" is also referred to as "/". As illustrated in Fig. 5, DL-RSTD may refer to a time difference measured by the UE between a reception start time point of a DL sub-frame of a reference TRP (TRP0 in Fig. 5) and a reception start time point of a DL sub-frame of another TRP. By detecting the DL-PRS, the start of the sub-frame may be determined.

A transmission timing of each TRP may not be uniform.

Regarding the calculation of the UE position by DL-TDOA, information indicated in the following 1) to 5) may be reported from the UE to GW/gNB/LMF.

1) Physical cell ID (PCI), global cell ID (GCI), and TRP-ID in each measurement
2) DL-RSTD measurement result
3) DL-PRS-RSRP measurement result
4) Time of measurement (time stamp)
5) Quality of each measurement

Regarding the calculation of the UE position by DL-TDOA, the information indicated in the following 1) to 6) may be reported from the gNB to the LMF.

1) PCI, GCI, and TRP-ID of the TRP controlled by the gNB
2) Timing information of the TRP controlled by the gNB
3) DL-PRS setting of the TRP controlled by the gNB
4) Information related to SSB of the TRP controlled by the gNB, for example, the time and frequency resources of the SSB
5) Information related to spatial direction of DL-PRS of the TRP controlled by the gNB
6) Information related to geographic coordinates of the TRP controlled by the gNB

The DL-RSTD may be defined as a time difference measured by the UE between a reception start time point of the DL sub-frame of the reference TRP and a reception start time point of the DL sub-frame of another TRP. A plurality of DL-PRS resources may be used to determine a reception start time point of a sub-frame.

As the report of timing information related to the TRP controlled by the gNB, SFN initialization time of the TRP may be reported. The SFN initialization time is a time at which SFN0 is started.

As the report of information related to the geographical coordinates of the TRP controlled by the gNB, a point on an ellipsoid having altitude and an ellipse indicating a range of error may be reported (refer to Non Patent Literature 6). For example, latitude, longitude, altitude, altitude direction, altitude error range, and the like may be reported.

As illustrated in Fig. 4, position information of the UE may be calculated based on the UL-TDOA. The position of the UE may be estimated based on UL-relative time of arrival (RTOA) in which a plurality of NR TRPs measure UL radio signals transmitted from the UE. For the estimation, other pieces of setting information may be used. Further, the position of the UE may be estimated based on RSRP of a UL-sounding reference signal (SRS) in addition to the UL-RTOA.

In the method based on UL-TDOA, the position of the UE may be calculated in the following procedure.
1) The UE transmits SRS to a plurality of TRPs
2) The gNB reports measurement results including UL-RTOA and geographic coordinates of the TRP to the LMF via the NRPPa
3) Based on the information reported by the gNB, the LMF calculates the position of the UE

For example, as illustrated in Fig. 4, an RTOA from the UE to the TRP0, an RTOA from the UE to the TRP1, and an RTOA from the UE to the TRP2 may be measured, and the position of the UE may be calculated based on the geographical position and a UL transmission timing of each TRP.

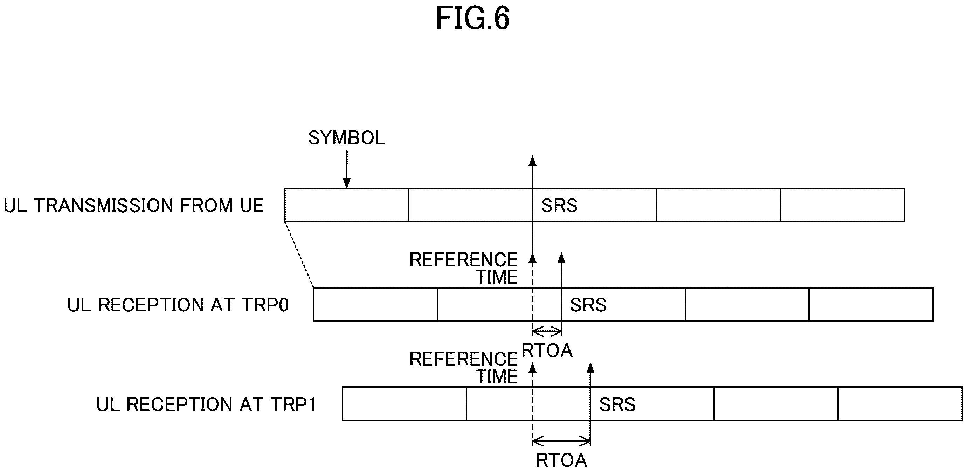

Fig. 6 is a diagram illustrating an example of measuring UL-RTOA. As illustrated in Fig. 6, the UL-RTOA may refer to a time difference between a reception start time point of a UL sub-frame including the SRS of the TRP and an RTOA reference time at which the UL is transmitted.

Regarding the calculation of the UE position by the UL-TDOA, information indicated in the following 1) to 9) may be reported from the gNB to the LMF.

1) PCI, GCI, and TRP-ID of the TRP controlled by the gNB
2) Information related to the SSB of the TRP controlled by the gNB, for example, the time and frequency resources of the SSB
3) Information related to geographic coordinates of the TRP controlled by the gNB
4) NR cell global identifier (NCGI) and TRP-ID of measurement
5)UL-RTOA
6) RSRP of UL-SRS
7) Time of measurement
8) Quality of each measurement
9) Information related to beam of each measurement

The UL-RTOA may be defined as a time difference between a reception start time point of the UL sub-frame including the SRS at the TRP and an RTOA reference time at which the UL is transmitted. The gNB may report the geographical coordinates of the TRP to the LMF via the NRPPa.

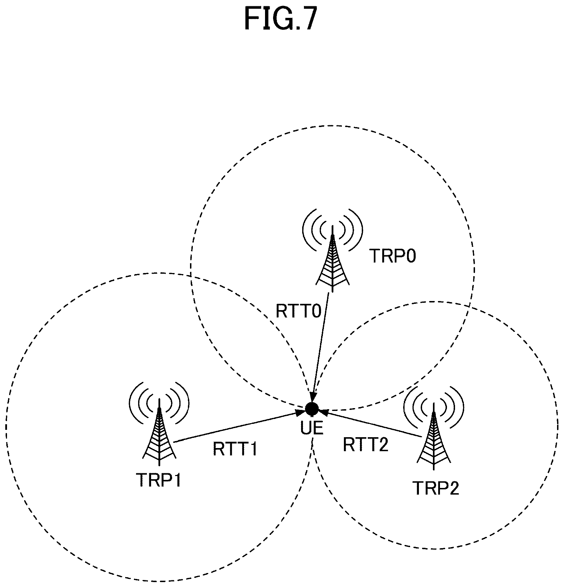

Fig. 7 is a diagram illustrating an example (2) of positioning. As illustrated in Fig. 7, the position information of the UE may be calculated based on a plurality of RTTs. The position of the UE may be estimated based on UE/gNB reception-transmission time difference measurement using DL-PRS and UL-SRS. For the estimation, DL-PRS-RSRP and UL-SRS-RSRP may be used. The LMF may determine the RTT using the UE/gNB reception-transmission time difference measurement.

In the method based on the multi-RTT, the position of the UE may be calculated in the following procedure.
1) The gNB transmits DL-PRS from each TRP to the UE
2) The UE transmits SRS to a plurality of TRPs
3) The UE reports a UE reception-transmission time difference to the GW and/or the gNB and/or the LMF via the LPP
4) The gNB reports a gNB reception-transmission time difference to the LMF via the NRPPa
5) Based on the information reported from the UE and the gNB, the LMF calculates the position of the UE

For example, as illustrated in Fig. 7, an RTT between the UE and the TRP0, an RTT between the UE and the TRP1, and an RTT between the UE and the TRP2 may be measured, and the position of the UE may be calculated based on the geographical position of each TRP.

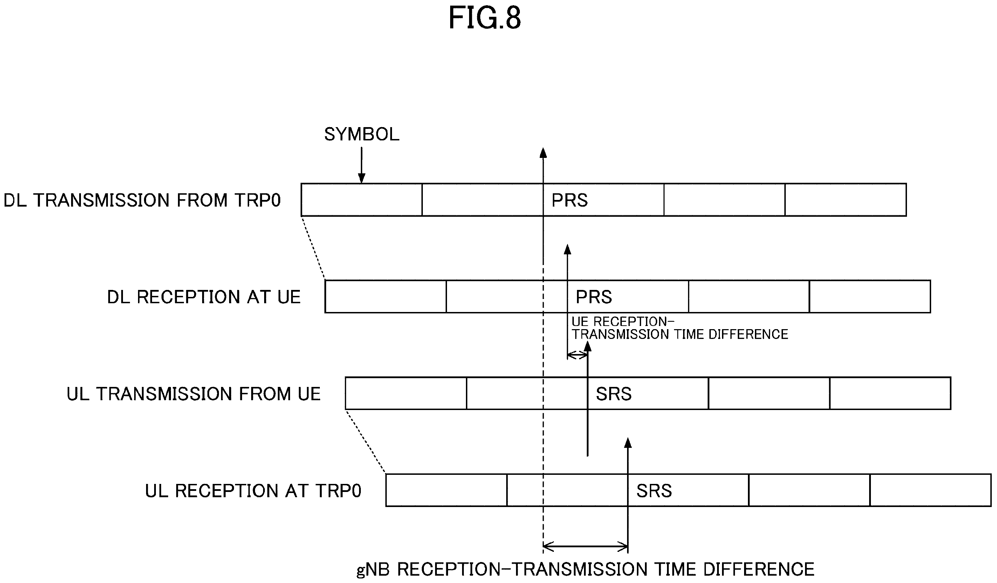

Fig. 8 is a diagram illustrating an example of measuring the RTT. As illustrated in Fig. 8, the UE reception-transmission time difference may refer to a time difference between a timing of receiving the DL sub-frame from the TRP and a timing of transmitting the UL sub-frame. In addition, as illustrated in Fig. 8, the gNB reception-transmission time difference may refer to a time difference between a timing at which the TRP receives the UL sub-frame and a timing at which the TRP transmits the DL sub-frame.

Regarding the calculation of the UE position by the plurality of RTTs, information indicated in the following 1) to 5) may be reported from the UE to the GW/gNB/LMF.

1) PCI, GCI and TRP-ID in each measurement
2) DL-PRS-RSRP measurement result
3) UE reception-transmission time difference measurement result
4) Time of measurement
5) Quality of each measurement

Regarding the calculation of the UE position by the RTT, the information indicated in the following 1) to 9) may be reported from the gNB to the LMF.

1) PCI, GCI, and TRP-ID of the TRP controlled by the gNB
2) Timing information of the TRP controlled by the gNB
3) DL-PRS setting of the TRP controlled by the gNB
4) Information related to SSB of the TRP controlled by the gNB, for example, the time and frequency resources of the SSB
5) Information related to spatial direction of DL-PRS of the TRP controlled by the gNB
6) Information related to geographic coordinates of the TRP controlled by the gNB
7) NCGI and TRP-ID of measurement
8) gNB reception-transmission time difference
9) RSRP of UL-SRS
10) UL-angle of arrival (AoA), for example, azimuth and elevation
11) Time of measurement
12) Quality of measurement
13) Information related to beam of measurement

Note that definitions of the UE reception-transmission time difference and the gNB reception-transmission time difference may be referred from Non Patent Literature **7.** Similar to DL-RSTD, the geographical coordinates of the TRP may be reported.

As described above, in the positioning by the Uu interface, the positioning method by DL-TDOA, UL-TDOA, and multi-RTT using RSTD, RTOA, and reception-transmission time difference indicating a propagation delay between the UE and the TRP, respectively, has been applied.

Here, to perform position estimation using a sidelink signal, it is necessary to consider a position estimation algorithm for absolute position estimation or relative position estimation, a definition and a transmission/reception procedure of a measurement sidelink signal used for position estimation, a reporting procedure of a measurement result, and the like. However, a position estimation algorithm for absolute position estimation or relative position estimation using a signal of device-to-device direct communication is not clear.

Therefore, Option 1) to Option 7) described below may be executed.

Option 1) With respect to the position estimation using the sidelink, the terminal 20 which desires to acquire the position information of the terminal 20 itself (hereinafter, referred to as a "UE-X") may transmit a predetermined signal to another terminal 20 (hereinafter, referred to as a "UE-Y") and may receive a signal based on the predetermined signal (for example, a measurement result) from the UE-Y.

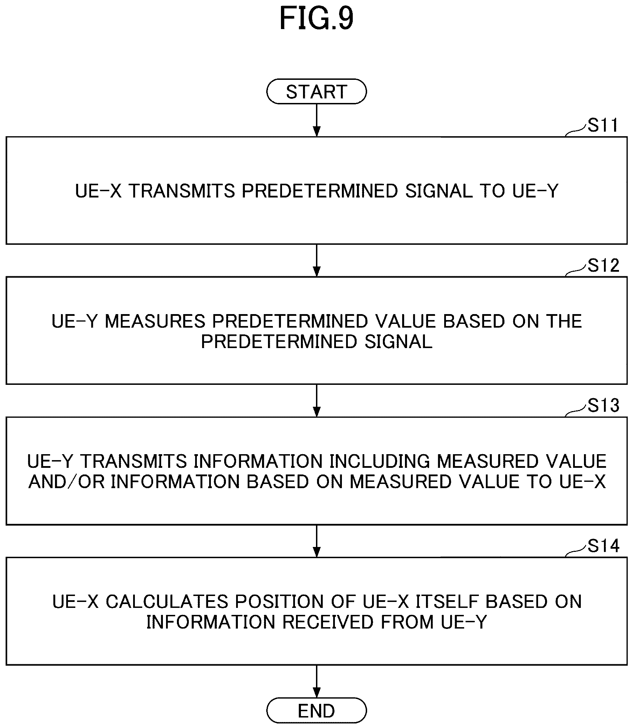

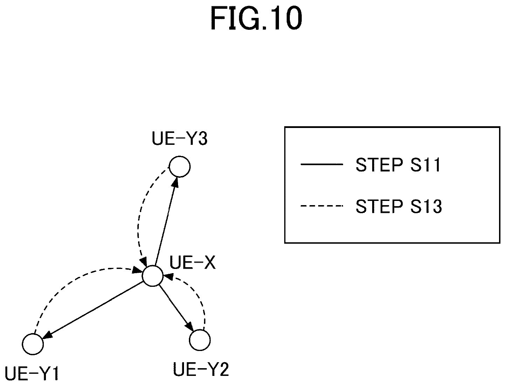

Fig. 9 is a flowchart illustrating an example (1) of position estimation according to the embodiment of the present invention. Fig. 10 is a diagram illustrating the example (1) of position estimation according to the embodiment of the present invention.

As illustrated in Figs. 9 and 10, in step S11, the UE-X transmits a predetermined signal to the UE-Y. In subsequent step S12, the UE-Y measures a predetermined value based on the predetermined signal. Note that step S12 may not be applied. In subsequent step S13, the UE-Y transmits a signal based on the predetermined signal (for example, information including a measured value and/or information based on the measured value may be included) to the UE-X. In subsequent step S14, the UE-X calculates the position of the UE-X itself based on the information received from the UE-Y.

For example, the UE-Y may be one or a plurality of UEs such as a UE-Y1, a UE-Y2, and a UE-Y3 illustrated in Fig. 10. That is, the UE-X may execute step S11 to step S14 for one or a plurality of UEs.

For example, the predetermined signal may be an SL positioning RS (SL-PRS) or any other SL signal. Further, the signal transmitted by the UE-Y may be the SL-PRS or any other SL signal.

Hereinafter, the signal used for the position estimation will be referred to as the SL-PRS, but is not limited thereto, and may be another name. Note that the position estimation and the positioning may be replaceable with each other.

For example, the SL-PRS may be multiplexed in PSCCH and/or PSSCH transmission and may be transmitted. Alternatively, the SL-PRS may be transmitted with a resource dedicated to the SL-PRS. Hereinafter, "PSCCH and/or PSSCH" is also referred to as "PSCCH/PSSCH".

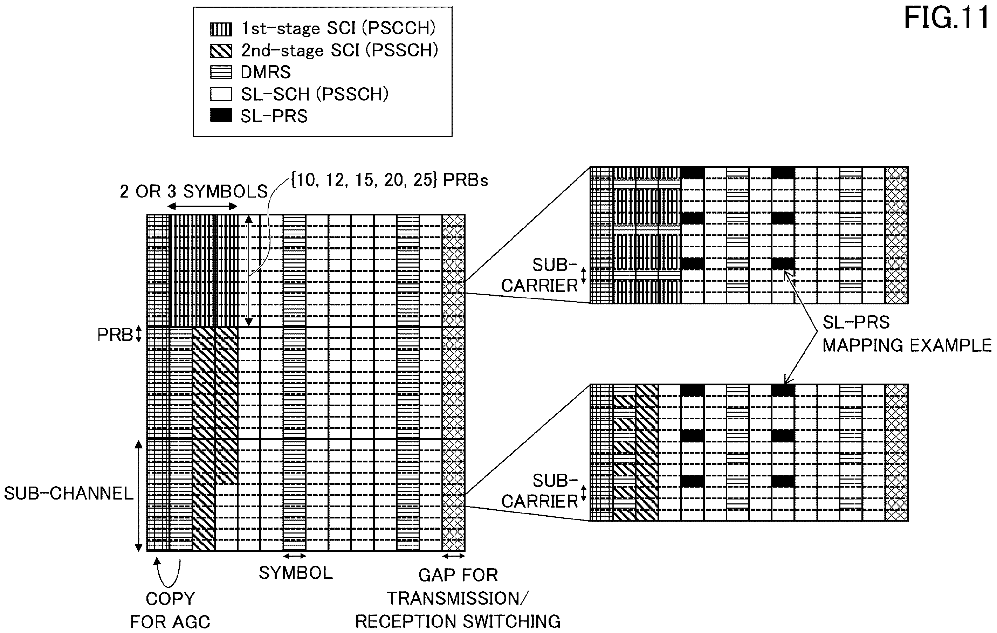

Fig. 11 is a diagram illustrating an arrangement example of a reference signal according to the embodiment of the present invention. The SL-PRS may be arranged as illustrated in the following 1) to 3).

1) The SL-PRS may not be multiplexed in an RE in which a second stage SCI and/or DM-RS and/or PT-RS and/or CSI-RS are arranged. For example, an overlap between the SL-PRS and the second stage SCI, the DM-RS, the PT-RS, and the CSI-RS may not be assumed. For example, when a mapping destination of the SL-PRS is the RE in which the second stage SCI, the DM-RS, the PT-RS, or the CSI-RS are arranged, mapping of the SL-PRS to the RE may not be executed.
2) The SL-PRS may not be multiplexed in the RE of the PSCCH. For example, an overlap between the PSCCH and the SL-PRS may not be assumed. For example, when the mapping destination of the SL-PRS is the RE in which the PSCCH is disposed, PSCCH may be prioritized and mapping of the SL-PRS to the RE may not be executed.
3) The SL-PRS may be, or may not be multiplexed with the second stage SCI and/or the DM-RS and/or the PT-RS and/or the CSI-RS, onto the same symbol by using the frequency division multiplexing.

According to the above 1) or 2), an important signal can be prevented from being replaced with the SL-PRS. In addition, according to the above 3), flexibility of mapping when the frequency division multiplexing is applied to the SL-PRS is improved, and UE operation can be simplified when the frequency division multiplexing is not applied to the SL-PRS. Even though Fig. 11 is an example of mapping of the SL-PRS, the present invention is not limited thereto.

For example, in step S14, the position of the UE-X itself calculated by the UE-X may be an absolute position or may be a relative position.

For example, Option 1) may be applied when the UE-X and the UE-Y are in an out-of-coverage (OoC) environment, may be applied when the UE-X and the UE-Y are in a partial-coverage (PC) environment, or may be applied when the UE-X and the UE-Y are in an in-coverage (IC) environment.

With the above-described Option 1), the terminal 20 can execute an operation for position information acquisition.

Option 2) With respect to the position estimation using the sidelink, the UE-X which desires to acquire the position information of the UE-X itself may transmit a predetermined signal to the UE-Y and/or the base station 10 (hereinafter, referred to as "BS-Y") and may receive a signal based on the predetermined signal (for example, a measurement result) from the UE-Y and/or the BS-Y.

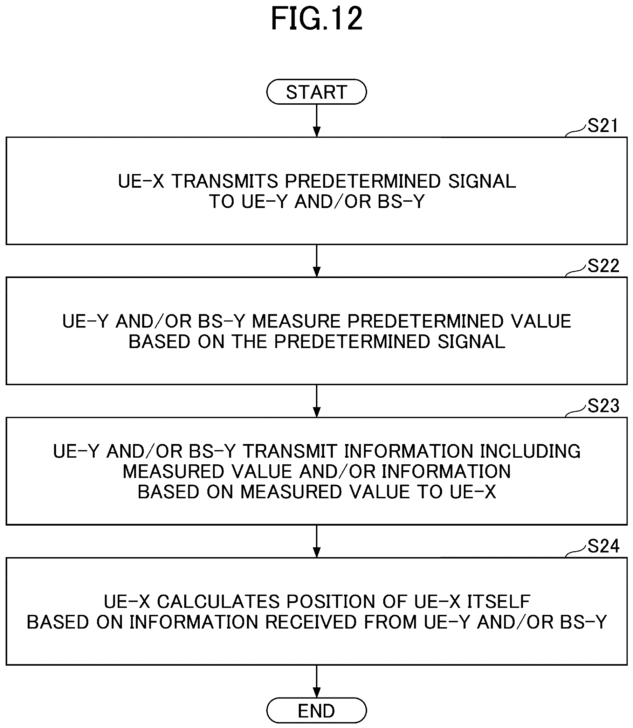

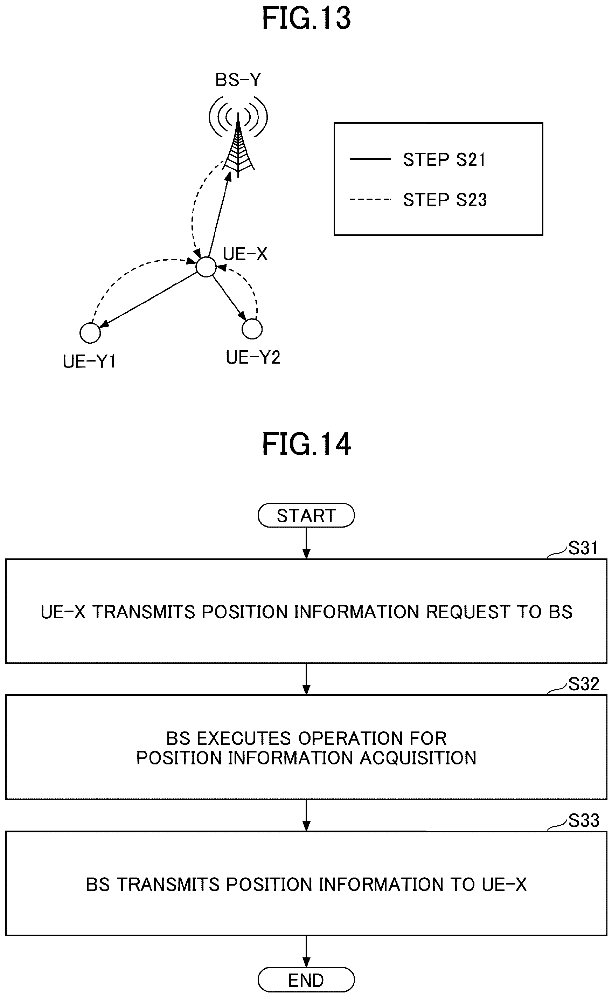

Fig. 12 is a flowchart illustrating an example (2) of position estimation according to the embodiment of the present invention. Fig. 13 is a diagram illustrating the example (2) of position estimation according to the embodiment of the present invention.

As illustrated in Figs. 12 and 13, in step S21, the UE-X transmits a predetermined signal to the UE-Y and/or the BS-Y. In subsequent step S22, the UE-Y and/or the BS-Y measure a predetermined value based on the predetermined signal. Note that step S22 may not be applied. In subsequent step S23, the UE-Y and/or the BS-Y transmit a signal based on the predetermined signal (for example, information including a measured value and/or information based on the measured value may be included) to the UE-X. In subsequent step S24, the UE-X calculates the position of the UE-X itself based on the information received from the UE-Y and/or the BS-Y.

For example, as in a UE-Y1 and a UE-Y2 illustrated in Fig. 13, the UE-Y may be one or a plurality of UEs. That is, the UE-X may execute step S11 to step S14 for one or a plurality of UEs. Further, the BS-Y may be one or a plurality of BSs.

For example, the predetermined signal for the UE-Y may be the SL-PRS or any other SL signal. For example, the predetermined signal for the BS-Y may be the SRS or any other UL signal. Further, the signal transmitted by the UE-Y may be the SL-PRS or any other SL signal. Further, the signal transmitted by the BS-Y may be the DL-PRS or any other DL signal.

For example, in step S24, the position of the UE-X itself calculated by the UE-X may be an absolute position or may be a relative position.

For example, Option 2) may be applied in the case of the partial-coverage environment or the in-coverage environment. However, the case of the partial-coverage environment may be a case in which the UE-X is in the in-coverage environment and the UE-Y is in the out-of-coverage environment.

According to the above-described Option 2), the terminal 20 can be expected to acquire more accurate position information by using the base station 10.

Option 3) The UE-X that acquired the position of the UE-X itself may transmit a request for position information transmission to the BS. For example, only the terminal 20 supporting a positioning function by the Uu interface may execute Option 3).

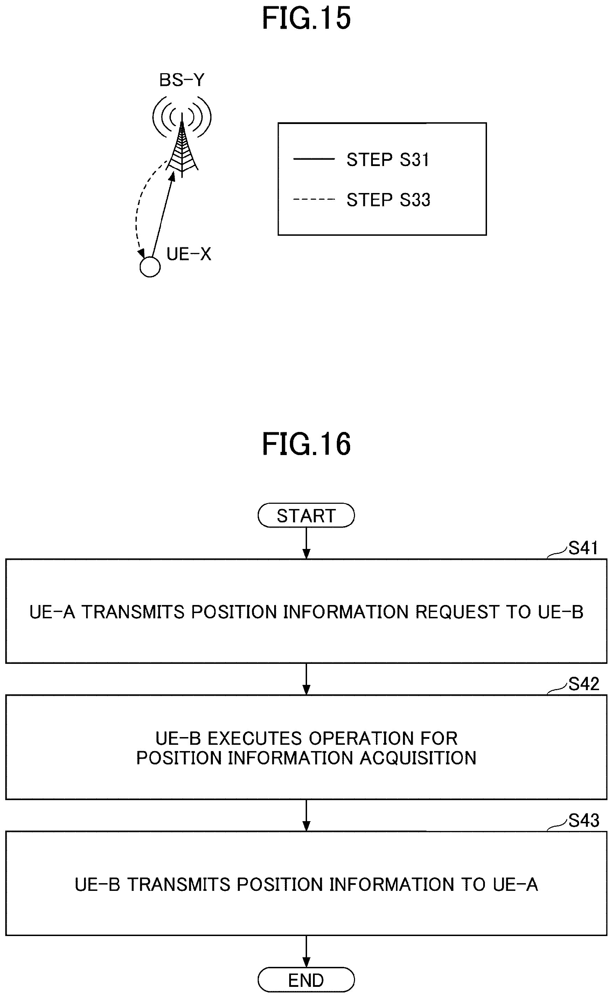

Fig. 14 is a flowchart illustrating an example (3) of position estimation according to the embodiment of the present invention. Fig. 15 is a diagram illustrating the example (3) of position estimation according to the embodiment of the present invention. As illustrated in Figs. 14 and 15, in step S31, the UE-X transmits a position information request to the BS. In subsequent step S32, the BS executes a position information acquisition operation. In subsequent step S33, the BS transmits position information to the UE-X.

For example, in step S32, the positioning function using the Uu interface described above may be applied.

For example, step S32 may be skipped without being executed. For example, when the BS has already had the position information of the UE-X, step S32 may not be executed. Further, for example, when the BS has already had the position information of the UE-X and the desired accuracy requirement is satisfied, step S32 may not be executed. For example, step S33 may be skipped without being executed. For example, when the DL-PRS is transmitted from a plurality of BS/TRPs to the UE-X and positioning is executed in the UE-X in step S32, step S33 may not be executed.

For example, the position information requested by the UE-X may be an absolute position or may be a relative position.

For example, the UE-X may receive an indication indicating that the position information cannot be acquired from the BS instead of receiving the position information. After receiving the indication, the UE-X may execute another method, for example, Option 1) or Option 2) to acquire the position information.

With the above-described Option 3), the terminal 20 can execute an operation for position information acquisition. By using Uu positioning, more accurate positioning can be expected.

Option 4) Which one of Option 1), Option 2), and Option 3) is to be executed may be determined based on a predetermined condition.

For example, the predetermined condition may be any one of the out-of-coverage environment, the partial-coverage environment, and the in-coverage environment.

For example, the predetermined condition may be an accuracy requirement. That is, an option to be applied may be determined based on whether the accuracy requirement is higher or lower than a predetermined threshold value.

For example, the predetermined condition may be whether of an absolute position or a relative position is to be acquired.

For example, the predetermined condition may be a predetermined priority set for each option. For example, Option 3) may be the highest priority, Option 2) may have the next highest priority, and Option 3) may have the lowest priority. The operation of executing the option with the next highest priority when the option with the highest priority cannot be executed may be performed and repeated.

For example, the predetermined condition may be a UE capability. That is, which one of an options is to be supported may be specified as the UE capability, and the terminal 20 may execute the option to be supported.

For example, the predetermined condition may be UE implementation. That is, the terminal 20 may determine an option to be executed based on the UE implementation.

With the above-described Option 4), the terminal 20 can determine which method is to be executed when a plurality of position acquisition methods are available.

Option 5) The terminal 20 (hereinafter, referred to as a "UE-A") which desires to acquire position information of another terminal 20 (hereinafter, referred to as a "UE-B") may transmit a request for position information transmission to the UE-B.

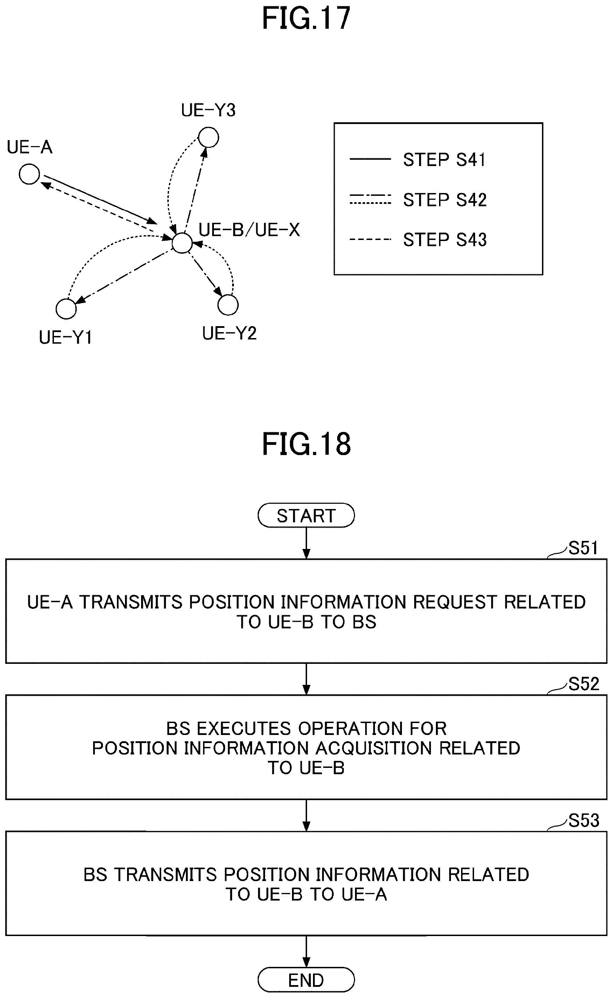

Fig. 16 is a flowchart illustrating an example (4) of position estimation according to the embodiment of the present invention. Fig. 17 is a diagram illustrating the example (4) of position estimation according to the embodiment of the present invention. As illustrated in Figs. 16 and 17, in step S41, the UE-A transmits a position information request to the UE-B. In subsequent step S42, the UE-B executes a position information acquisition operation. In subsequent step S43, the UE-B transmits position information of the UE-B to the UE-A.

For example, in step S42, Option 1), Option 2), or Option 3) may be executed. The UE-B may be a UE-X in Option 1), Option 2), or Option 3). The UE-A may or may not be included in the UE-Ys in Option 1), Option 2), or Option 3). When the UE-A is included in the UE-Ys in Option 1), Option 2), or Option 3), any step in Option 1), Option 2), or Option 3) for the UE-A may be skipped without being executed.

For example, step S42 may be skipped without being executed. For example, when the UE-B has already had the position information of the UE-B itself, step S42 may not be executed. Furthermore, for example, when the UE-B has already had the position information of the UE-B itself and the desired accuracy requirement is satisfied, step S42 may not be executed.

For example, the position information requested by the UE-A may be an absolute position or a relative position.

With Option 5), it is possible to support a use case and a service which requires the position information of another UE. In addition, the operation of acquiring the position information of another UE and the operation of acquiring the position information of the UE itself can be the same.

Option 6) The terminal 20 (hereinafter, referred to as the "UE-A") which desires to acquire the position information of another terminal 20 (hereinafter, referred to as the "UE-B") may transmit a request for position information transmission related to the UE-B to the BS.

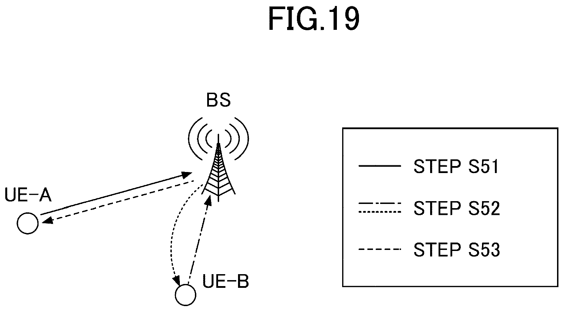

Fig. 18 is a flowchart illustrating an example (5) of position estimation according to the embodiment of the present invention. Fig. 19 is a diagram illustrating the example (5) of position estimation according to the embodiment of the present invention. As illustrated in Figs. 18 and 19, in step S51, the UE-A transmits a position information request related to the UE-B to the BS. In subsequent step S52, the BS executes a position information acquisition operation related to the UE-B. In subsequent step S53, the BS transmits position information related to the UE-B to the UE-A.

For example, in step S52, the positioning function of the Uu interface, for example, the positioning function of the Uu interface described above may be executed.

For example, in step S52, the BS may indicate the UE-B to execute a positioning function of the SL, for example, Option 1) or Option 2). The UE-B may execute the positioning function of the SL, for example, Option 1) or Option 2), and may report the acquired position information of the UE-B itself to the BS.

For example, step S52 may be skipped without being executed. For example, when the BS has already had the position information of the UE-B, step S52 may not be executed. Furthermore, for example, when the BS a has already had the position information of the UE-B and the desired accuracy requirement is satisfied, step S52 may not be executed.

For example, the position information requested by the UE-A may be an absolute position or a relative position.

For example, the UE-A may receive an indication indicating that the position information related to the UE-B cannot be acquired from the BS instead of receiving the position information. After receiving the indication, the UE-A may execute another method, for example, Option 5) to acquire the position information.

With the above-described Option 6), the terminal 20 can execute an operation for position information acquisition. By using Uu positioning, more accurate positioning can be expected.

Option 7) Which one of Option 5) and Option 6) is to be executed may be determined based on a predetermined condition.

For example, the predetermined condition may be any one of the out-of-coverage environment, the partial-coverage environment, and the in-coverage environment.

For example, the predetermined condition may be an accuracy requirement.

For example, the predetermined condition may be which one of an absolute position or a relative position is to be acquired.

For example, the predetermined condition may be a predetermined priority set for each option. For example, Option 6) may have a higher priority than Option 5).

For example, the predetermined condition may be a UE capability. That is, which one of options is to be supported may be specified as the UE capability, and the terminal 20 may execute the option to be supported.

For example, the predetermined condition may be UE implementation. That is, the terminal 20 may determine an option to be executed based on the UE implementation.

With the above-described Option 7), the terminal 20 can determine which method is to be executed when a plurality of position acquisition methods are available.

Here, in sidelink communication, when position information is acquired, it is necessary to stipulate whether position information acquired in the past can be used. When there is position information measured most recently, it is desirable to use the position information. In a case where a predetermined time has elapsed from a time point of previous measurement, it is desirable to newly acquire the position information.

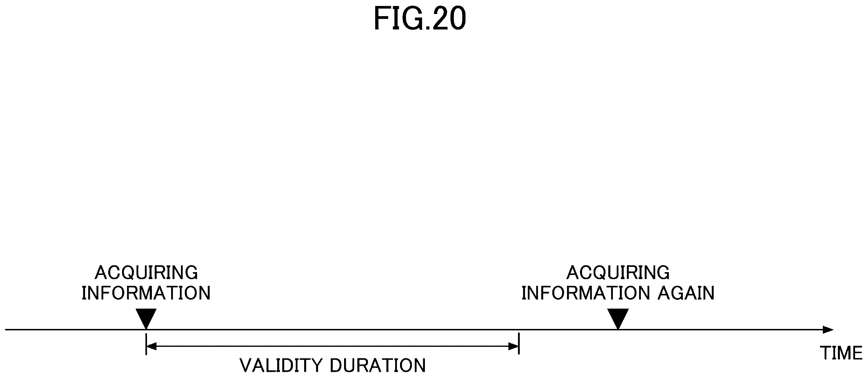

Fig. 20 is a diagram illustrating an example of an expiration date of information related to positioning according to the embodiment of the present invention. As illustrated in Fig. 20, the UE that has acquired information related to positioning may assume that the information is valid until a predetermined time (for example, a valid period illustrated in Fig. 20) has elapsed since acquisition of the information. After the predetermined time has elapsed, the UE may assume that the information is invalid. It is noted that a transmission/reception partner related to acquisition of information assumed to be valid and a transmission/reception partner related to acquisition of position information to be newly executed may be the same UE or different UEs.

The predetermined time may be determined based on an RRC parameter. The predetermined time may be provided by setting or pre-setting, or may be provided by PC5-RRC setting.

The predetermined time may be given for each predetermined condition. The predetermined condition may be a requirement related to positioning, a priority, or an SL-PRS setting. Which one of the predetermined time or the predetermined condition is to be used may be implicitly or explicitly notified from the UE-A to the UE-B.

The predetermined time may be given to each acquired information (for example, an absolute position or a relative position). The predetermined time may be given for each acquisition method (for example, TDOA and RTT).

By the above-described operation, the valid period can be set to an appropriate value for each use case or each target information.

The predetermined time may be notified from another UE, or may be notified together with a signal related to positioning. As a result, the predetermined time can be flexibly changed.

The lapse of the predetermined time may be determined using an acquisition timing of the information related to the positioning (for example, a slot including a signal related to positioning or the last symbol of the slot) as a start point.

A timer for determining the lapse of the predetermined time may be defined and used in an upper layer (for example, an MAC layer).

In an operation related to information acquisition of the positioning, the operation may be determined based on whether information acquired in the past is valid or invalid. When the information is valid, the information may be used, and when the information is invalid, the operation related to the information acquisition may be executed again. As a result, an optimum operation related to position information acquisition can be applied based on the valid period.

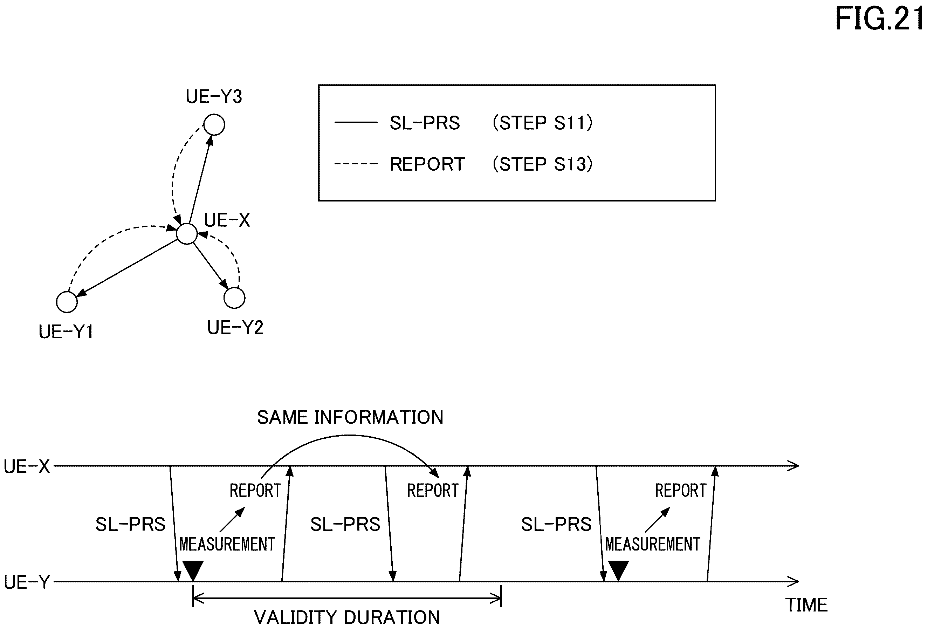

Fig. 21 is a diagram illustrating an example (1) of transmission and reception of the information related to the positioning according to the embodiment of the present invention. As illustrated in Fig. 21, the UE that has received a measurement signal (hereinafter, referred to as SL-PRS) for positioning and/or a measurement request may assume that information measured or acquired from the SL-PRS and/or information measured or acquired based on the measurement request is valid until a predetermined period T1 elapses from a timing related to the measurement or acquisition. For example, the UE-Y in the option 1) may execute this procedure.

The timing related to the measurement or acquisition may be an SL-PRS reception timing, an information measurement or acquisition timing, an SL-PRS transmission timing, or a measurement request reception timing.

When the SL-PRS and/or the measurement request are received from the same UE or different UEs and valid information is included, the valid information may be transmitted without execution of measurement or may not be transmitted.

When the SL-PRS and/or the measurement request are received from the same UE or different UEs, and the valid information is not included or the information is invalid, measurement or acquisition of the information may be executed based on the information measured from the SL-PRS and/or the measurement request, and a report may be performed.

Fig. 21 is an example in which a timing at which the SL-PRS is received from the UE-X and measurement is performed is set as a start time point of the valid period. When receiving the SL-PRS from the UE-X again within the valid period, the UE-Y may report the latest measurement result to the UE-X without executing measurement. When receiving the SL-PRS from the UE-X again out of the valid period, the UE-Y may execute measurement and report the measurement result to the UE-X.

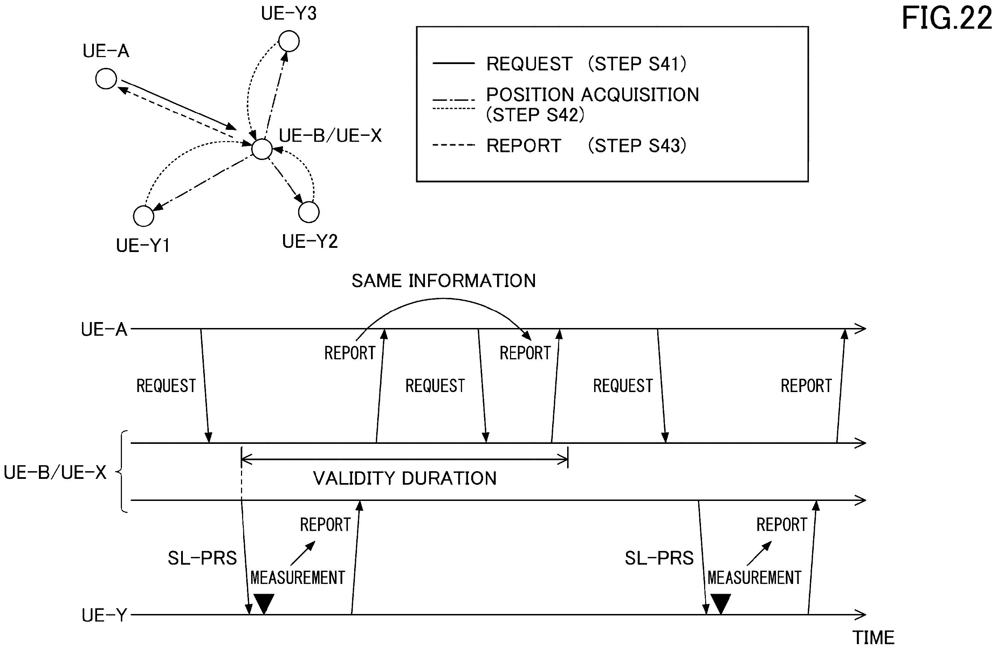

Fig. 22 is a diagram illustrating an example (2) of transmission and reception of the information related to the positioning according to the embodiment of the present invention. Fig. 22 is an example in which a timing at which the SL-PRS is transmitted to the UE-Y is set as a start time point of the valid period. When the UE-B receives the measurement request from the UE-A again within the valid period, the UE-B may report the latest measurement result to the UE-A without executing measurement on the UE-Y. When the UE-B receives the measurement request from the UE-A again out of the valid period, the UE-B may transmit the SL-PRS to the UE-Y, may acquire a measurement result, and may report the measurement result to the UE-A. For example, the UE-B in the option 5) may execute this procedure.

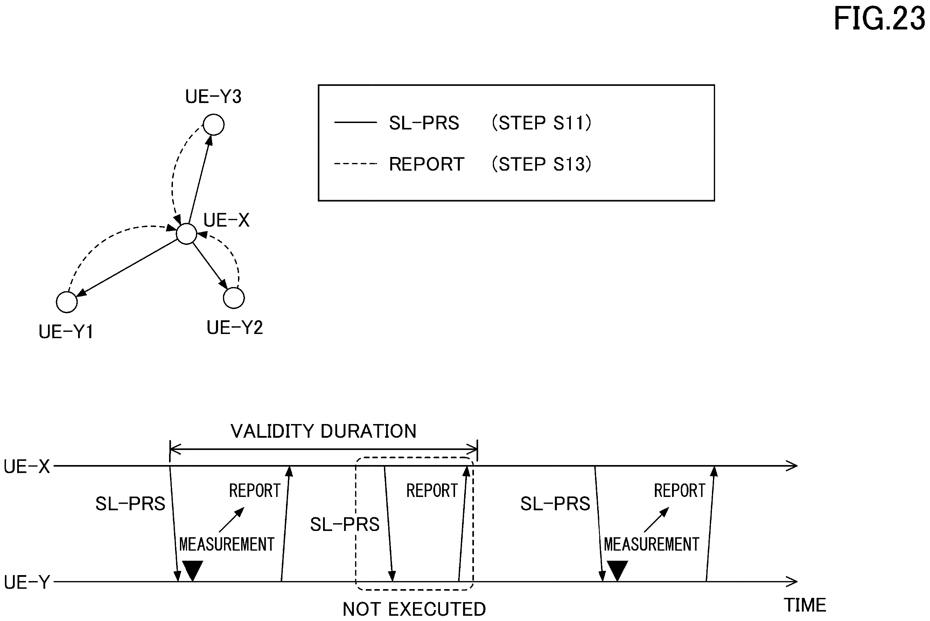

Fig. 23 is a diagram illustrating an example (3) of transmission and reception of the information related to the positioning according to the embodiment of the present invention. As illustrated in Fig. 23, the UE that has transmitted the SL-PRS and/or the measurement request may assume that the information is valid until a predetermined time T2 elapses from a timing related to transmission of the information. For example, the UE-X in the option 1) may execute this procedure, and the UE-A in the option 5) may execute this procedure.

When the position information is requested from an upper layer (for example, an application layer) in the UE (the UE-X in Fig. 23 and the UE-A in Fig. 22) and the UE has valid information, the valid information or validity of the information may be reported to the upper layer without performing a transmission/reception operation of a signal related to position acquisition, or the report may not be performed.

When the position information is requested from the upper layer (for example, the application layer) in the UE (the UE-X in Fig. 23 and the UE-A in Fig. 22) and the UE does not have valid information, the transmission/reception operation of the signal related to the position acquisition may be executed, and the report may be performed.

In the above-described example, the UE may be replaced with a BS, or the SL signal may be replaced with a UL signal (DL/UL).

The above-described embodiment may be applied to D2D of NR or may be applied to D2D of another RAT. In addition, the above-described embodiment may be applied to FR2 or may be applied to other frequency bands.

The above-described embodiment is not limited to the V2X terminal, and may be applied to a terminal that performs D2D communication.

The operation according to the above-described embodiment may be executed only in a specific resource pool. For example, processing may be executed only in a resource pool available to the terminal 20 of 3GPP release 17 or 3GPP release 18 or later.

According to the above-described embodiment, the terminal 20 can perform positioning by using a sidelink signal based on an expiration date of information related to the positioning.

That is, it is possible to assume the expiration date of the information related to the positioning in device-to-device direct communication.

### (Device Configuration)

Next, a description will be given as to functional configuration examples of the base station 10 and the terminal 20 that execute processes and operations described above. The base station 10 and the terminal 20 include a function of implementing the above-described embodiment. However, each of the base station 10 and the terminal 20 may have only some functions in the embodiment.

### <Base Station 10>

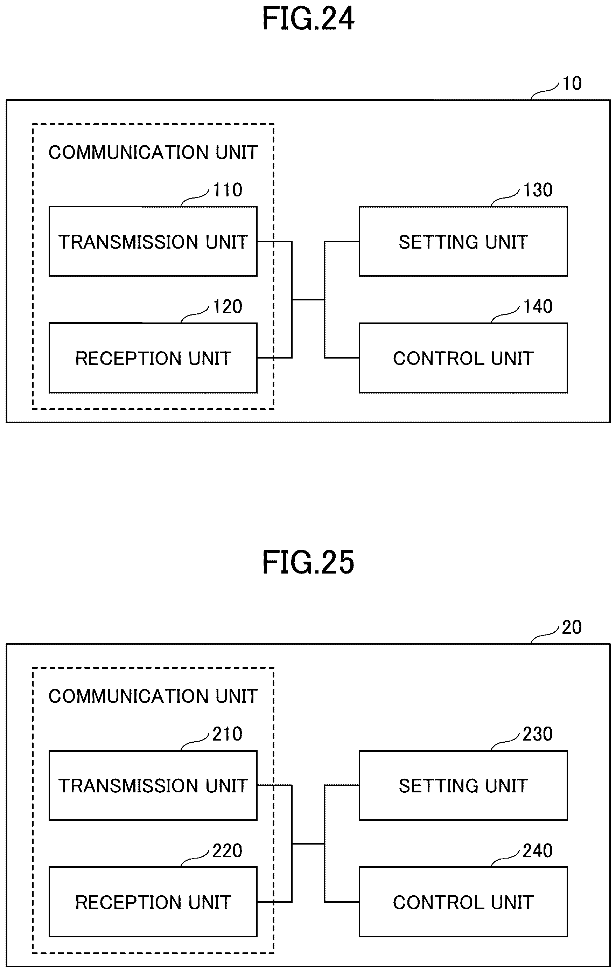

Fig. 24 is a diagram illustrating an example of a functional configuration of the base station 10. As illustrated in Fig. 24, the base station 10 includes a transmitting unit 110, a reception unit 120, a setting unit 130, and a control unit 140. The functional configuration illustrated in Fig. 24 is merely an example. As long as the operation according to the embodiment of the present invention can be executed, the functional classification and the name of a functional unit may be freely determined.

The transmitting unit 110 has a function of generating a signal to be transmitted to the terminal 20 side and wirelessly transmitting the signal. The reception unit 120 has a function of receiving various signals transmitted from the terminal 20 and acquiring, for example, information of a higher layer from the received signals. In addition, the transmitting unit 110 has a function of transmitting NR-PSS, NR-SSS, NR-PBCH, a DL/UL control signal, a DL reference signal, and the like to the terminal 20.

The setting unit 130 stores setting information set in advance and various types of setting information to be transmitted to the terminal 20 in the storage device, and reads the various types of setting information from the storage device as necessary. A content of the setting information is, for example, information related to the setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmitting unit 110. Furthermore, the control unit 140 receives information on HARQ responses of the D2D communication and the DL communication from the terminal 20 via the reception unit 120. A functional unit related to signal transmission in the control unit 140 may be included in the transmitting unit 110, and a functional unit related to signal reception in the control unit 140 may be included in the reception unit 120.

### <Terminal 20>

Fig. 25 is a diagram illustrating an example of a functional configuration of the terminal 20. As illustrated in Fig. 25, the terminal 20 includes a transmitting unit 210, a reception unit 220, a setting unit 230, and a control unit 240. The functional configuration illustrated in Fig. 25 is merely an example. As long as the operation according to the embodiment of the present invention can be executed, the functional classification and the name of a functional unit may be freely determined.

The above-described LTE-SL transmission/reception mechanism (module) and the above-described NR-SL transmission/reception mechanism (module) may separately include the transmitting unit 210, the reception unit 220, the setting unit 230, and the control unit 240.

The transmitting unit 210 generates a transmission signal from transmission data and wirelessly transmits the transmission signal. The reception unit 220 wirelessly receives various signals and acquires a signal of a higher layer from the received signals of a physical layer. Furthermore, the reception unit 220 has a function of receiving NR-PSS, NR-SSS, NR-PBCH, a DL/UL/SL control signal or reference signal, or the like transmitted from the base station 10. Furthermore, for example, the transmitting unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as D2D communication, and the reception unit 220 receives the PSCCH, the PSSCH, the PSDCH, the PSBCH, or the like from the other terminal 20.

The setting unit 230 stores various types of setting information received from the base station 10 or the terminal 20 by the reception unit 220 in the storage device, and reads the various types of setting information from the storage device as necessary. The setting unit 230 also stores setting information set in advance. A content of the setting information is, for example, information related to the setting of the D2D communication.

As described in the embodiment, the control unit 240 controls the D2D communication for establishing RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information related to HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from the resource selection window based on a result of sensing, or may execute reevaluation or pre-emption. Furthermore, the control unit 240 performs processing related to power saving in transmission and reception of the D2D communication. Furthermore, the control unit 240 performs processing related to inter-terminal cooperation in the D2D communication. A functional unit related to signal transmission in the control unit 240 may be included in the transmitting unit 210, and a functional unit related to signal reception in the control unit 240 may be included in the reception unit 220.

### (Hardware Configuration)

The block diagrams (Figs. 24 and 25) used for the description of the above-described embodiment illustrate blocks of functional units. These functional blocks

(configuration units) are realized by any combination of at least one of hardware and software. A method of implementing each functional block is not particularly limited. That is, each functional block may be realized by using one physically or logically combined device, or may be realized by directly or indirectly (for example, by using wired, wireless, or the like) connecting two or more physically or logically separated devices and using a plurality of these devices. The functional block may be realized by combining software with the one device or the plurality of devices.

The functions include, but are not limited to, determining, determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (a configuration unit) that causes transmission to function is referred to as a transmitting unit or a transmitter. In any case, as described above, the implementation method is not particularly limited.

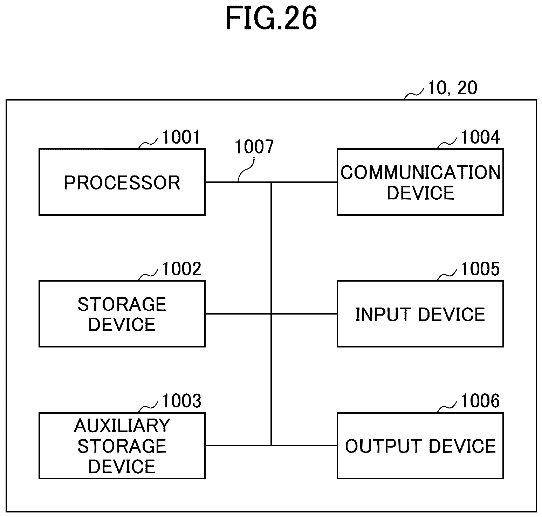

For example, the base station 10, the terminal 20, and the like in the embodiment of the present disclosure may function as a computer that performs processing of the wireless communication method of the present disclosure. Fig. 26 is a diagram illustrating an example of a hardware configuration of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configuration of the base station 10 and the terminal 20 may be configured to include one or a plurality of devices illustrated in the drawing, or may be configured without including some devices.

Each function in the base station 10 and the terminal 20 is implemented by the processor 1001 performing operation by loading predetermined software (a program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may be configured with a central processing unit (CPU) including an interface with a peripheral device, a control device, an arithmetic device, a register, and the like. For example, the control unit 140, the control unit 240, and the like described above may be realized by the processor 1001.

In addition, the processor 1001 reads a program (a program code), a software module, data, or the like from at least one of the auxiliary storage device 1003 and the communication device 1004 to the storage device 1002, and executes various types of processing according to the data. As the program, a program that causes a computer to execute at least a part of the operations described in the above-described embodiments is used. For example, the control unit 140 of the base station 10 illustrated in Fig. 24 may be realized by a control program stored in the storage device 1002 and operated by the processor 1001. Furthermore, for example, the control unit 240 of the terminal 20 illustrated in Fig. 25 may be realized by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be mounted by one or more chips. It is noted that the program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmission/reception device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like in order to implement, for example, at least one of frequency division duplex (FDD) and time division duplex (TDD). For example, a transmission/reception antenna, an amplifier unit, a transmission/reception unit, a transmission/reception path interface, and the like may be realized by the communication device 1004. The transmission/reception unit may be physically or logically separated between the transmitting unit and the reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that executes an output to the outside. It is noted that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured with hardware such as a microprocessor, a digital signal processor (DSP), an application specific integrated circuit (ASIC), a programmable logic device (PLD), or a field programmable gate array (FPGA), and some or all of the functional blocks may be realized by the hardware. For example, the processor 1001 may be mounted using at least one of these pieces of hardware.

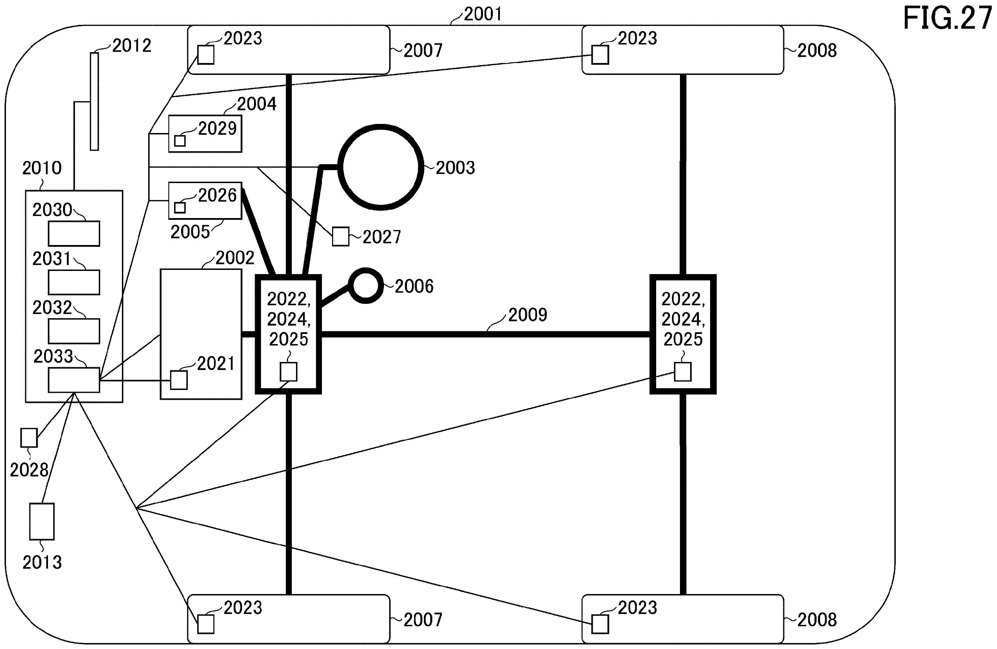

Fig. 27 illustrates a configuration example of a vehicle 2001. As illustrated in Fig. 27, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM) 2032, and a communication port (IO port) 2033. Signals from the various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses a current of a motor, a rotation speed signal of a front wheel and a rear wheel acquired by the rotation speed sensor 2022, an air pressure signal of a front wheel and a rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 includes various devices for providing (outputting) various types of information such as driving information, traffic information, and entertainment information, such as a car navigation system, an audio system, a speaker, a television, and a radio, and one or more ECUs that control these devices. The information service unit 2012 provides various kinds of multi-media information and multi-media services to an occupant in the vehicle 2001 using information acquired from an external device via the communication module 2013 or the like. The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that executes an output to the outside.

A driving assistance system unit 2030 includes various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs for controlling these devices. The driving assistance system unit 2030 also transmits and receives various types of information via the communication module 2013, thereby achieving a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be provided in the inside or outside of the electronic control unit 2010. The external device may be, for example, a base station, a mobile station, or the like.

The communication module 2013 may transmit at least one of the above-described signals from the various sensors 2021 to 2028 input to the electronic control unit 2010, information obtained based on the signals, and information based on an input from the outside (user) obtained via the information service unit 2012 to the external device via wireless communication. The electronic control unit 2010, the various sensors 2021 to 2028, the information service unit 2012, and the like may be referred to as input units that receive inputs. For example, the PUSCH transmitted by the communication module 2013 may include information based on the input.

The communication module 2013 receives various types of information (traffic information, signal information, inter-vehicle information, and the like) transmitted from the external device, and displays the information on the information service unit 2012 provided in the vehicle 2001. The information service unit 2012 may be referred to as an output unit that outputs information (for example, information is output to a device such as a display or a speaker based on a PDSCH (or data/information decoded from the PDSCH) received by the communication module 2013). The communication module 2013 also stores various types of information received from the external devices in the memory 2032 available by the microprocessor 2031. The microprocessor 2031 may control, based on the information stored in the memory 2032, the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001.

### (Summary of Embodiments)

As described above, according to the embodiment of the present invention, there is provided a terminal including: a reception unit configured to receive, from a first terminal, a signal related to positioning in device-to-device direct communication; a control unit configured to execute measurement based on the signal related to the positioning in the device-to-device direct communication and to assume that acquired information is valid within a certain period of time; and a transmitting unit configured to transmit the information based on the measurement to the first terminal.

According to the configuration, the terminal 20 can perform positioning by using a sidelink signal based on an expiration date of information related to the positioning. That is, it is possible to assume the expiration date of the information related to the positioning in device-to-device direct communication.

When information that corresponds to the signal related to the positioning in the device-to-device direct communication and that is assumed to be valid is not held, measurement may be executed based on the signal related to the positioning in the device-to-device direct communication, or a second terminal may be caused to execute the measurement. According to the configuration, the terminal 20 can perform positioning by using a sidelink signal based on an expiration date of information related to the positioning.

When information that corresponds to the signal related to the positioning in the device-to-device direct communication and that is assumed to be valid is held, information based on the information assumed to be valid may be transmitted to the first terminal. According to the configuration, the terminal 20 can perform positioning by using a sidelink signal based on an expiration date of information related to the positioning.

A start time point of the certain period of time may be a time point of receiving a signal used to acquire information corresponding to the signal related to the positioning in the device-to-device direct communication. According to the configuration, the terminal 20 can perform positioning by using a sidelink signal based on an expiration date of information related to the positioning.

The reception unit may receive information indicating a length of the certain period of time together with the signal related to the positioning in the device-to-device direct communication. According to the configuration, the terminal 20 can perform positioning by using a sidelink signal based on an expiration date of information related to the positioning.

Furthermore, according to the embodiment of the present invention, there is provided a positioning method of allowing a terminal to execute: a reception procedure of receiving, from a first terminal, a signal related to positioning in device-to-device direct communication; a control procedure of executing measurement based on the signal related to the positioning in the device-to-device direct communication and assuming that acquired information is valid within a certain period of time; and a transmission procedure of transmitting the information based on the measurement to the first terminal.

According to the configuration, the terminal 20 can perform positioning by using a sidelink signal based on an expiration date of information related to the positioning. That is, it is possible to assume the expiration date of the information related to the positioning in device-to-device direct communication.

### (Supplement to Embodiment)

Although the embodiments of the present invention have been described above, the disclosed invention is not limited to such embodiments, and those skilled in the art will understand various modifications, modifications, alternatives, substitutions, and the like. Although the description has been given using specific numerical examples to facilitate understanding of the invention, these numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. Regarding a processing procedure described in the embodiments, the order of the processing may be changed as long as there is no contradiction. For convenience of processing description, the base station 10 and the terminal 20 have been described using a functional block diagram, but such a device may be realized by hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to the aspects/embodiments described in the present disclosure, and may be performed using other methods. For example, the notification of information may be performed by physical layer signaling (for example, downlink control information (DCI) and uplink control information (UCI)), higher layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system that is extended, modified, generated, and stipulated based thereon. Further, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or a plurality of network nodes having the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, and the like), at least one of these wired and wireless technologies is included within the definition of the transmission medium.

The pieces of information, signals, and the like described in the present disclosure may be represented using any one of a variety of different techniques. For example, data, an instruction, a command, information, a signal, a bit, a symbol, a chip, and the like that may be mentioned throughout the above description may be represented by a voltage, a current, an electromagnetic wave, a magnetic field or a particle, an optical field or a photon, or any combination thereof.

It is noted that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, a radio resource may be indicated by an index.

The names used for the parameters described above are not limited in any respect. Furthermore, mathematical formulas and the like using these parameters may be different from those explicitly disclosed in the present disclosure. Since various channels (for example, PUCCH, PDCCH, and the like) and information elements can be identified by any suitable name, various names assigned to these various channels and information elements are not in any way limitative names.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femtocell, a picocell, or the like.

The base station may accommodate one or a plurality of (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station and the base station subsystem that performs a communication service in this coverage.

In the present disclosure, a state indicating that the base station transmits information to the terminal may be replaced with a state indicating that the base station instructs the terminal to perform control and operation based on the information.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a transmission device, a reception device, a communication device, or the like. It is noted that at least one of the base station and the mobile station may be a device mounted on a mobile object, the mobile object itself, or the like. The mobile object refers to a movable object, and a moving speed thereof is any moving speed. In addition, a case in which the mobile object is stopped is naturally included. The mobile object includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone (registered trademark), a multi-copter, a quadcopter, a balloon, and objects mounted thereon, and the present invention is not limited thereto. Further, the mobile object may be a mobile object that autonomously travels based on an operation command. The mobile object may be a vehicle (for example, a car, an airplane, or the like), a mobile object that is movable without human intervention (for example, a drone, a self-driving vehicle, or the like), or a robot (manned type or unmanned type). It is noted that at least one of the base station and the mobile station includes a device that does not necessarily move during the communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between a base station and the user terminal is replaced with communication between a plurality of terminals 20 (for example, may be referred to as device-to-device (D2D), vehicle-to-everything (V2X), or the like). In this case, the terminal 20 may have a function of the base station 10 described above. In addition, words such as "upstream" and "downstream" may be replaced with words corresponding to inter-terminal communication (for example, "side"). For example, an uplink channel, a downlink channel, and the like may be replaced with a side channel.

Similarly, the user terminal in the present disclosure may be replaced with the base station. In this case, the base station may have a function of the user terminal described above.

The terms "determining" and "determining" used in the present disclosure may encompass a wide variety of actions. The terms "determining" and "determining" may include, for example, a case in which "judging", "calculating", "computing", "processing", "deriving", "investigating", "looking up, searching, inquiring" (for example, looking up in a table, a database, or another data structure), and "ascertaining" is deemed as "determining" and "determining". Furthermore, the terms "determining" and "determining" may include a case in which "receiving" (for example, receiving information), "transmitting" (for example, transmitting information), "inputting", "outputting", or "accessing" (for example, accessing data in a memory) is deemed as "determining" and "determining". In addition, the terms "determining" and "determining" may include a case in which "resolving", "selecting", "choosing", "establishing", "comparing", or the like is deemed as "determining" and "determining". That is, the "determining" and "determining" may include a case in which a certain action or operation is deemed as "determining" and "determining". Further, "determining" may be replaced with "assuming", "expecting", "considering", or the like.

The terms "connected", "coupled", or any variation thereof, mean any direct or indirect connection or coupling between two or more elements, and can include the presence of one or more intermediate elements between two elements that are "connected" to each other or "coupled" to each other. The coupling or connection between the elements may be physical, logical, or a combination thereof. For example, "connection" may be replaced with "access". As used in this disclosure, two elements can be considered to be "connected" or "coupled" to each other using at least one of one or more wires, cables, printed electrical connections, and as some non-limiting and non-inclusive examples, using electromagnetic energy having wavelengths in a radio frequency domain, a microwave region, and a light (both visible and invisible) region, and the like.

The reference signal may be abbreviated as RS (reference signal), or may be referred to as a pilot according to an applied standard.

As used in this disclosure, the phrase "based on" does not mean "based only on", unless explicitly stated otherwise. In other words, the description "based on" means both "based only on" and "based at least on".

Any reference to elements using designations such as "first" and "second" as used in the present disclosure does not generally limit the amount or order of those elements. These designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, these terms are intended to be inclusive in a manner similar to the term "comprising". Furthermore, the term "or" used in the present disclosure is intended not to be an exclusive OR.

A radio frame may be configured with one or a plurality of frames in a time domain. Each of the one or a plurality of frames in the time domain may be referred to as a sub-frame. The sub-frame may further be configured with one or a plurality of slots in the time domain. The sub-frame may be a fixed time length (for example, 1 ms) that is independent of numerology.

Numerology may be a communication parameter applied to at least one of transmission and reception of a signal or a channel. Numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on numerology.

The slot may include a plurality of mini-slots. Each mini-slot may be configured with one or a plurality of symbols in the time domain. Further, the mini-slot may be referred to as a sub-slot. The mini-slot may be configured with a smaller number of symbols than the slot. A PDSCH (or PUSCH) transmitted in a time unit larger than the mini-slot may be referred to as a PDSCH (or PUSCH) mapping type A. A PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period of time shorter than 1 ms (for example, 1 to 13 symbols), or a period of time longer than 1 ms. It is noted that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. It is noted that the definition of the TTI is not limited thereto.

The TTI may be a transmission time unit such as a channel coded data packet (a transport block), a code block, or a code word, or may be a processing unit such as scheduling or link adaptation. It is noted that, when a TTI is given, a time interval (for example, the number of symbols) in which the transport block, the code block, the code word, and the like are actually mapped may be shorter than the TTI.

It is noted that, when one slot or one mini-slot is referred to as the TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI with a time length of 1 ms may be referred to as a general TTI (TTI in LTE Rel.8-12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

It is noted that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and equal to or greater than 1 ms.

The resource block (RB) is a resource allocation unit in the time domain and the frequency domain, and may include one or a plurality of consecutive sub-carriers in the frequency domain. The number of sub-carriers included in the RB may be the same regardless of numerology, for example, may be 12. The number of sub-carriers included in the RB may be determined based on numerology.

In addition, the time domain of the RB may include one or a plurality of symbols, and may be a length of one slot, one mini-slot, one sub-frame, or one TTI. Each of one TTI, one sub-frame, and the like may be configured with one or a plurality of resource blocks.

It is noted that one or a plurality of RBs may be referred to as a physical resource block (physical RB, PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as a partial bandwidth or the like) may represent a subset of contiguous common resource blocks (RBs) for numerology in a certain carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be configured in one carrier for the terminal 20.

At least one of the configured BWPs may be active, and the terminal 20 may not assume that a predetermined signal/channel is transmitted and received outside the active BWPs. It is noted that "cell", "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per sub-frame or radio frame, the number of mini-slots included in the slot, the number of symbols and RBs included in the slot or mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following these articles is a plural form.

In the present disclosure, the term "A and B are different" may mean "A and B are different from each other". It is noted that the term may mean that "A and B are different from C". Terms such as "separated from" and "coupled to" may be interpreted in the same manner as "different".

Each aspect/embodiment described in the present disclosure may be used alone, or may be used in combination, or may be used by being switched with execution. Furthermore, notification of predetermined information (for example, notification of "being X") is not limited to being performed explicitly, and may be performed implicitly (for example, the predetermined information is not notified).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is given for the purpose of illustration and does not have any restrictive meaning to the present disclosure.

### Reference Signs List

- 10: Base station
- 110: Transmitting unit
- 120: Reception unit
- 130: Setting unit
- 140: Control unit
- 20: Terminal
- 210: Transmitting unit
- 220: Reception unit
- 230: Setting unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM, RAM)
- 2033: Communication port (IO port)

## Claims

1. A terminal comprising:
a reception unit configured to receive, from a first terminal, a signal related to positioning in device-to-device direct communication;
a control unit configured to execute measurement based on the signal related to the positioning in the device-to-device direct communication and to assume that acquired information is valid within a certain period of time; and
a transmitting unit configured to transmit the information based on the measurement to the first terminal.

2. The terminal according to claim 1, wherein, when information that corresponds to the signal related to the positioning in the device-to-device direct communication and that is assumed to be valid is not held, measurement is executed based on the signal related to the positioning in the device-to-device direct communication, or a second terminal is caused to execute the measurement.

3. The terminal according to claim 1, wherein, when information that corresponds to the signal related to the positioning in the device-to-device direct communication and that is assumed to be valid is held, information based on the information assumed to be valid is transmitted to the first terminal.

4. The terminal according to claim **1,** wherein a start time point of the certain period of time is a time point of receiving a signal used to acquire information corresponding to the signal related to the positioning in the device-to-device direct communication.

5. The terminal according to claim 1, wherein the reception unit receives information indicating a length of the certain period of time together with the signal related to the positioning in the device-to-device direct communication.

6. A positioning method of allowing a terminal to execute:
a reception procedure of receiving, from a first terminal, a signal related to positioning in device-to-device direct communication;
a control procedure of executing measurement based on the signal related to the positioning in the device-to-device direct communication and assuming that acquired information is valid within a certain period of time; and
a transmission procedure of transmitting the information based on the measurement to the first terminal.
